(19) Europäisches Patentamt

European Patent Office

Office européen des brevets

(11) **EP 2 079 994 B1**

(12) **FASCICULE DE BREVET EUROPEEN**

(45) Date de publication et mention de la délivrance du brevet:
**29.09.2010 Bulletin 2010/39**

(21) Numéro de dépôt: **07821440.0**

(22) Date de dépôt: **17.10.2007**

(51) Int Cl.:
*G01K 7/32* *(2006.01)*    *G01K 11/26* *(2006.01)*

(86) Numéro de dépôt international:
**PCT/EP2007/061075**

(87) Numéro de publication internationale:
**WO 2008/046850 (24.04.2008 Gazette 2008/17)**

(54) **PROCEDE DE FABRICATION COLLECTIVE DE CAPTEURS SANS CALIBRAGE A BASE DE DISPOSITIF A ONDES ACOUSTIQUES**

PROZESS ZUR KOLLEKTIVEN HERSTELLUNG VON KALIBRATIONSFREIEN SENSOREN AUF DER BASIS VON OBERFLÄCHENWELLENANORDNUNGEN

PROCESS FOR THE COLLECTIVE FABRICATION OF CALIBRATION-FREE SENSORS BASED ON ACOUSTIC WAVE DEVICES

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **17.10.2006  FR 0609076**

(43) Date de publication de la demande:
**22.07.2009  Bulletin 2009/30**

(73) Titulaire: **Senseor**
**06560 Valbonne (FR)**

(72) Inventeurs:
• **CHOMMELOUX, Luc**
**06110 Le Cannet (FR)**
• **LARDAT, Raphaël**
**06330 Roquefort-Les-Pins (FR)**

• **BALLANDRAS, Sylvain**
**25000 Besancon (FR)**

(74) Mandataire: **Esselin, Sophie et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A-2005/103639    US-A- 4 626 775**

• **BUFF W. ET AL: "Universal pressure and temperature SAW sensor for wireless applications" ULTRASONICS SYMPOSIUM PROCEEDINGS, vol. 1, 1997, pages 359-362, XP002435990 cité dans la demande**

**Description**

Le domaine de l'invention est celui des capteurs passifs interrogeables à distance et notamment des capteurs de température, à base de résonateurs à ondes acoustiques de surface ou de volume.

Par exemple, de tels capteurs se composent d'une unité d'interrogation (constituée elle-même d'une partie émettrice et d'une partie réceptrice) et d'un capteur de température à ondes acoustiques de surface désigné couramment sous le nom SAW (acronyme anglais pour surface acoustic wave). Le système d'interrogation ainsi que le capteur SAW sont munis d'une antenne adaptée à la bande de fréquence de travail (bande ISM 433 MHz, 868 MHz, 2.45 GHz,...) ce qui permet d'effectuer une interrogation sans fil du capteur.

Le mode d'interrogation est le suivant : L'émetteur du système d'interrogation envoie un signal d'interrogation (impulsion temporelle basse fréquence d'une porteuse dans la bande ISM) vers le capteur SAW. Le dispositif SAW est de type résonateur ce qui permet d'accéder à des structures de taille réduite.

Si le signal d'émission présente une fréquence de résonance suffisamment proche de la fréquence propre du résonateur SAW, ce dernier entre en résonance en passant par une période de charge. Il s'établit alors un régime permanent d'oscillation à la fréquence de résonance propre du dispositif SAW. Cette fréquence de résonance est proportionnelle à la vitesse de l'onde de surface dans la cavité résonante qui dépend elle-même de la température à laquelle est le résonateur.

Le capteur re-émet un signal à sa fréquence de résonance qui porte l'information liée à la grandeur à mesurer, par exemple la température.

Le récepteur du système d'interrogation détecte en dehors de la plage temporelle d'émission tout ou partie du signal SAW (oscillation amortie) et en extrait l'information recherchée, par exemple la température, via un traitement du signal adapté.

Typiquement, le résonateur est composé d'un transducteur à peignes inter-digités, constitué d'une alternance d'électrodes de largeurs qui se répètent avec une certaine périodicité appelée période de métallisation déposée sur un substrat piézoélectrique pouvant avantageusement être du quartz. Les électrodes, avantageusement en aluminium (réalisées par un procédé de photolithographie) présentent une faible épaisseur devant la période de métallisation (typiquement, quelques centaines de nanomètres à quelques micromètres). Par exemple pour un capteur fonctionnant à 433 MHz, l'épaisseur de métal (aluminium) utilisée peut être de l'ordre de 1000 Angstrôms, la période de métallisation et la largeur d'électrode pouvant être respectivement de l'ordre de 3.5 $\mu$m et 2.5 $\mu$m.

Un des ports du transducteur est par exemple relié à une antenne RadioFréquence (RF) et l'autre à la masse. Les lignes de champ ainsi créées entre deux électrodes de polarités différentes donnent naissance à des ondes acoustiques de surface dans la zone de recouvrement des électrodes.

Le transducteur est une structure bi-directionnelle c'est à dire que l'énergie rayonnée vers la droite et l'énergie rayonnée vers la gauche ont la même intensité. En disposant de part et d'autre du transducteur des électrodes, celles-ci jouant le rôle de réflecteur, on réalise un résonateur, chaque réflecteur réfléchissant partiellement l'énergie émise par le transducteur.

Si l'on multiplie le nombre de réflecteurs, on crée une cavité résonante caractérisée par une certaine fréquence de résonance. Cette fréquence dépend en premier lieu de la vitesse de propagation des ondes sous le réseau, celle-ci dépendant principalement de l'état physique du substrat, et donc sensible par exemple à la température. Dans ce cas, c'est le paramètre qui est mesuré par le système d'interrogation et c'est à partir de cette mesure qu'une température peut être calculée.

On rappelle que la variation de la fréquence de résonance d'un résonateur sur quartz est déterminée par la formule suivante :

$$f(T) = f_O \left[ 1 + CTF_1 (T-T_0) + CTF_2 (T-T_0)^2 \right] \qquad (1)$$

avec $f_0$ la fréquence à $T_0$, $T_0$ la température de référence (25 °C par convention), $CTF_1$ le coefficient du premier ordre (ppm/°C) et $CTF_2$ le coefficient du second ordre (ppb/°C$^2$).

On peut également, reformuler cette loi en faisant apparaître une température d'inversion de la loi (1), dite de turn-over :

$$f(T) = f_{Tt} + f_0 \, CTF_2 \left( T-T_{\text{turn-over}} \right)^2 \qquad (2)$$

avec $f_{Tt}$ la fréquence à la température de turn-over et $T_{\text{turn-over}}$ la température de turn-over ;

Ces grandeurs sont données par les équations suivantes :

$$T_{\text{turn-over}} = T0 - CTF_1 / 2CTF_2$$

$$f_{Tt} = f_0 [ 1 - CTF_1^2 / 4CTF_2 ] \qquad (3)$$

La loi de variation de la fréquence de résonance en fonction de la température est donc une parabole ; la température à laquelle la fréquence est maximum (sommet de la parabole) est appelée température de turn over.

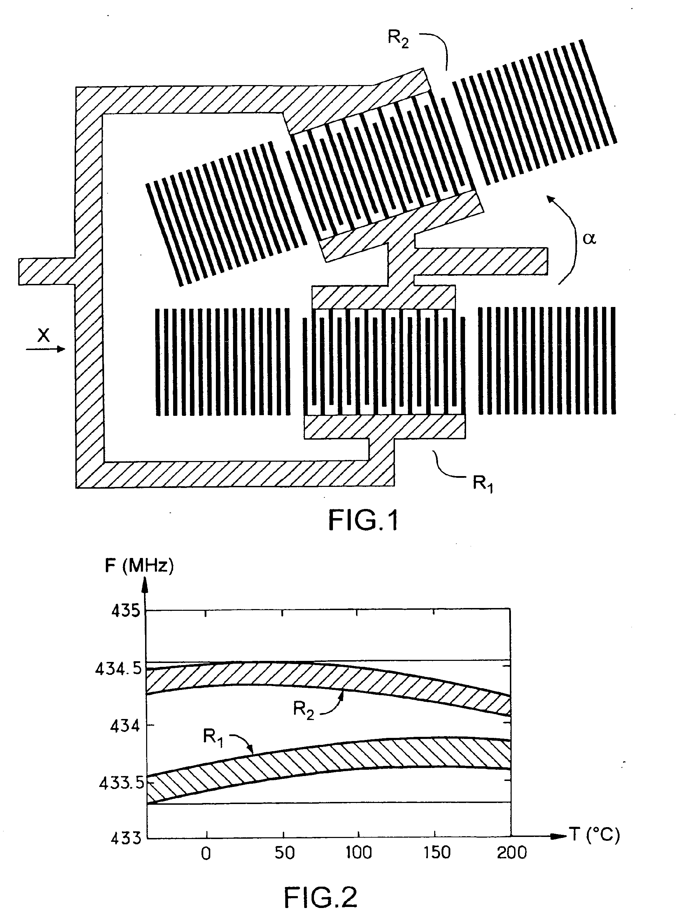

Il peut être particulièrement intéressant d'utiliser deux résonateurs SAW (W. Buff et al., "Universal pressure and temperature SAW sensor for wireless applications" 1997 IEEE Ultra. Symp. Proc.), inclinés l'un par rapport à l'autre comme illustré en figure 1. Dans ce cas, un premier résonateur $R_1$ pour lequel la direction de propagation des ondes de surface est selon une direction X correspondant à un des axes cristallographiques du substrat cristallin, est couplé à un second résonateur $R_2$, incliné d'un certain angle $\alpha$ (pouvant typiquement être de l'ordre de 20°) par rapport à l'axe X, et utilisant donc une autre direction de propagation.

En inclinant le second résonateur par rapport au premier résonateur, on lui confère une sensibilité différente vis à vis de la température. La figure 2 illustre un tel comportement en présentant une occupation spectrale typique du capteur de température SAW (fréquence en MHz en fonction de la température en °C).

Dans l'exemple choisi, les premier et second résonateurs ont respectivement une température de turn over aux alentours de 150 °C et de 40°C. L'espace entre les 2 courbes inférieures et les 2 courbes supérieures correspond à la dispersion de fabrication de l'ordre de 250 kHz pour cet exemple.

Le fait d'utiliser une structure différentielle présente plusieurs avantages. Le premier est que la différence de fréquence des résonateurs est presque linéaire en fonction de la température et les non-linéarités résiduelles sont corrigées par le calibrage du capteur. L'autre avantage de la structure différentielle réside dans le fait que l'on peut s'affranchir de la majeure partie des effets de vieillissement.

Les documents WO2005/103639 et BUFF W. ET AL: "Universal pressure and temperature SAW sensor for wireless applications", ULTRASONICS SYMPOSIUM PROCEEDINGS, vol. 1, 1997, pages 359-362, décrivent de tels capteurs comprenant deux résonateurs SAW.

De manière générale, le capteur de température utilise deux résonateurs $R_1$ et $R_2$ possédant deux directions de propagation différentes.

Les fréquences des deux résonateurs $R_1$ et $R_2$ s'écrivent conformément à l'équation (1) :

$$f1 = f_{10} [ 1 + c_1 (\psi_1) \theta + c_2 (\psi_1) \theta^2 ] \qquad (4)$$

$$f_2 = f_{20} [ 1 + c_1 (\psi_2) \theta + c_2 (\psi_2) \theta^2 ]$$

avec $\theta = T - T_0$ l'écart à la température ambiante, $C_1$ et $C_2$ les coefficients $CTF_1$ et $CTF_2$ et $\psi$ l'angle de propagation.

La différence entre les fréquences des résonateurs $R_1$ et $R_2$ donne :

$$\Delta f = f_{10} - f_{20} + \theta (f_{10} c_1 (\psi_1) - f_{20} c_1 (\psi_2)) + \theta^2 (f_{10} c_2 (\psi_1) - f_{20} c_2 (\psi_2))$$

On peut réécrire l'équation du second ordre en $\theta$ sous la forme :

$$\Delta f = \Delta_0 + s\theta + \varepsilon\theta^2 \qquad (5)$$

avec :

$$\Delta f = f_1 - f_2$$

$$\Delta_0 = f_{10} - f_{20}$$

$$s = f_{10}c_1(\Psi_1) - f_{20}c_1(\Psi_2) \qquad (6)$$

$$\varepsilon = f_{10}\,c_2(\psi_1) - f_{20}\,c_2(\psi_2)$$

où :

- s représente la sensibilité à la température au premier ordre
- $\varepsilon$ le coefficient du terme d'ordre deux
- $\Delta f$ la différence des fréquences à la température $\theta$ (différence lue à l'interrogation)
- $\Delta_0$ la différence des fréquences nominales à la température ambiante $T_0$

La procédure de calibrage a pour but de déterminer les trois termes : $\Delta_0$, s et $\varepsilon$ afin de pouvoir calculer a posteriori la température à partir d'une mesure de la différence de fréquence $\Delta f$. En effet, la résolution de l'équation du second degré en $\theta$ nous donne :

$$T = T_0 + [-s + (s^2 - 4\varepsilon(\Delta_0 - \Delta f))^{1/2}] / 2\varepsilon \qquad (7)$$

Afin de faciliter l'étape d'extraction de la température à partir d'une mesure de différence de fréquence de résonance, on définit trois coefficients de calibrage $a_0$, $a_1$, $a_2$ qui permettent de calculer la fréquence à l'aide de l'équation (8) :

$$T = a_0 + (a_1 + a_2 \Delta f)^{1/2} \qquad (8)$$

Le calibrage est une opération consistant à déterminer les coefficients $a_0$, $a_1$ et $a_2$ ; cette opération est néanmoins coûteuse en temps puisqu'elle nécessite de mesurer pour chaque capteur la différence de fréquence entre les deux résonateurs à trois températures différentes au minimum et nécessite de plus une sérialisation de chaque capteur (correspondant à l'identification pour chaque capteur d'un couple capteur - coefficients de calibrage).

On peut par exemple envisager de stocker les coefficients de calibrage $a_0$, $a_1$, $a_2$ dans le système d'interrogation. Cette configuration nécessite en cas de changement de capteur de stocker les nouveaux coefficients dans le système d'interrogation.

L'ensemble de ces contraintes est rédhibitoire dans certains cas où des objectifs de faibles coûts doivent être atteints.

De manière générale, l'erreur sur l'évaluation de la température $d\theta$ mesurée avec un capteur SAW à deux résonateurs est donnée au premier ordre par l'équation suivante :

$$d\theta = (d\Delta_I + d\Delta_0) / S_\theta + \theta\, dS_\theta / S_\theta \qquad (9)$$

où

- $d\Delta_I$ est la précision de lecture de la fréquence au niveau système d'interrogation
- $d\Delta_0$ est la dispersion de la différence de fréquence entre les 2 résonateurs à la température $T_0$
- Se est la sensibilité typique du capteur (kHz/°C)
- $dS_\theta$ est la dispersion de sensibilité d'un capteur à l'autre
- $\theta$ est l'écart de température par rapport à $T_0$

Si l'on estime l'erreur $d\theta$ pour une température donnée $T_0 + \theta$ sur la base des valeurs typiques des paramètres $d\Delta_I$, $d\Delta_0$, $S_\theta$ et $dS_\theta$, on obtient une valeur inacceptable (vis à vis des exigences des applications) qui rend incontournable l'opération de calibrage.

La plus forte contribution (supérieure à 80%) est liée à la dispersion sur la différence de fréquence.

On désigne par puces les éléments obtenus après découpe du substrat sur lequel sont réalisés les dispositifs à ondes de surface et portant indifféremment un résonateur unique ou un ensemble de résonateurs réalisant la fonction de capteur. Il a déjà été envisagé de diminuer la dispersion sur la variation de fréquence, en calant chacun des résonateurs par gravure du quartz, de l'aluminium ou par gravure de la silice (couche de passivation). Cette méthode nécessite le développement d'un procédé spécifique puisqu'il faut ajuster la fréquence des deux résonateurs sur la même puce d'une façon indépendante. Les précisions de gravure doivent par ailleurs être très élevées afin de répondre aux exigences de dispersion de fréquence (typiquement : +/- 5 kHz soit une maîtrise de l'ordre de +/- 1 Angström ce qui est un objectif difficile à atteindre).

Dans ce contexte, la présente invention propose un procédé de fabrication collective permettant d'obtenir des capteurs de temperature à ondes acoustiques de manière optimisée sans opération de calibrage.

Plus précisément l'invention a pour objet un procédé de fabrication collective de capteurs de temperature interrogeables à distance, chaque capteur comportant au moins un premier résonateur et un second résonateur, chaque résonateur comportant des transducteurs à ondes acoustiques de conception telle qu'ils présentent respectivement une première et une seconde fréquences de fonctionnement, **caractérisé en ce qu'**il comporte les étapes suivantes :

- la fabrication d'une première série de premiers résonateurs, lesdits premiers résonateurs comportant chacun une première fréquence de fonctionnement appartenant à un premier ensemble de fréquences centré sur une première fréquence centrale;
- la fabrication d'une seconde série de seconds résonateurs, lesdits seconds résonateurs comportant chacun une seconde fréquence de fonctionnement appartenant à un second ensemble de fréquences centré sur une seconde fréquence centrale; la mesure des fréquences de résonance des premiers résonateurs et des seconds résonateurs,
- une série d'appariements d'un premier résonateur et d'un second résonateur de manière à former des couples de résonateurs présentant une différence de fréquences de fonctionnement égale à la différence des première et seconde fréquences centrales.

Selon une variante de l'invention, le procédé de fabrication comprend les étapes suivantes :

- la fabrication de premiers résonateurs sur un premier substrat intermédiaire et la fabrication de seconds résonateurs sur un second substrat intermédiaire ;
- des découpes unitaires de premières et de secondes puces comportant respectivement les premiers et seconds résonateurs à partir des premier et second substrats intermédiaires ;
- l'appariement d'une première et d'une seconde puces ;
- l'assemblage des paires de puces dans un boîtier.

Selon une variante de l'invention, le procédé comprend :

- la fabrication de premiers résonateurs sur un premier substrat intermédiaire et la fabrication de seconds résonateurs sur un second substrat intermédiaire ;
- des découpes unitaires de premières et de secondes puces comportant respectivement les premiers et seconds résonateurs à partir des substrats intermédiaires ;
- l'assemblage des premières puces et des secondes puces dans des boîtiers individuels ;
- l'appariement d'une première et d'une seconde puces mises au préalable en boîtier.

Selon une variante de l'invention, le procédé de fabrication comprend en outre une étape préalable de stabilisation en température des premiers et seconds résonateurs.

Selon une variante de l'invention, les résonateurs sont réalisés sur un substrat intermédiaire piézoélectrique pouvant typiquement être du quartz, ou tout autre matériau tels que LiNb03, LiTa03, la langasite et ses variantes, le GaP04, le tétraborate de lithium, le KNbO3, enfin de façon générique tout substrat piézoélectrique susceptible de présenter des coupes compensées et non compensées des effets à mesurer.

Selon une variante de l'invention, les premiers résonateurs sont orientés sur le premier substrat intermédiaire selon une première direction, les seconds résonateurs sont orientés sur le second substrat intermédiaire selon une seconde direction, lesdites directions correspondant aux directions de propagation des ondes de surface, et ce de manière à ce que la première direction fasse un angle non nul avec la seconde direction.

Une solution alternative consiste à utiliser une coupe de quartz différente et le même angle de propagation pour chaque résonateur. On peut enfin utiliser des coupes et directions de propagation différentes pour tirer parti des propriétés particulières de certaines orientations aptes à minimiser la sensibilité des caractéristiques thermiques de la fréquence à ces paramètres géométriques.

L'invention sera mieux comprise et d'autres avantages apparaîtront à la lecture de la description qui va suivre donnée à titre non limitatif et grâce aux figures annexées parmi lesquelles :

- la figure 1 illustre un exemple de couple de résonateurs utilisés dans un capteur de température selon l'art connu ;
- la figure 2 illustre les dispersions en fréquences de résonance en fonction de la température dues à la fabrication pour un premier résonateur et un second résonateur utilisés dans un capteur selon l'invention ;
- la figure 3 illustre la dispersion en fréquence pour un ensemble de premiers résonateurs et un ensemble de seconds résonateurs utilisés dans un capteur de température SAW obtenu selon le procédé de l'invention ;
- la figure 4 illustre deux substrats intermédiaires utilisés dans le procédé de fabrication collective de l'invention et comportant des directions de propagation des ondes de surface selon des directions différentes ;
- la figure 5 illustre le rendement d'appariement de couples de résonateurs utilisés dans l'invention, en fonction du nombre de pièces fabriquées ;
- la figure 6 illustre l'appariement de deux résonateurs, selon une première variante de l'invention dans laquelle les deux résonateurs sont assemblés dans un seul boîtier
- la figure 7 montre l'appariement de deux résonateurs, selon une seconde variante de l'invention dans laquelle les deux résonateurs sont assemblés dans deux boîtiers indépendants.

De manière générale, le procédé de fabrication selon l'invention utilise la dispersion naturelle de fabrication, de façon à apparier un premier résonateur réalisé sur un premier substrat intermédiaire avec un second résonateur réalisé sur un second substrat intermédiaire et ce de façon à conserver une différence de fréquence constante entre les deux résonateurs.

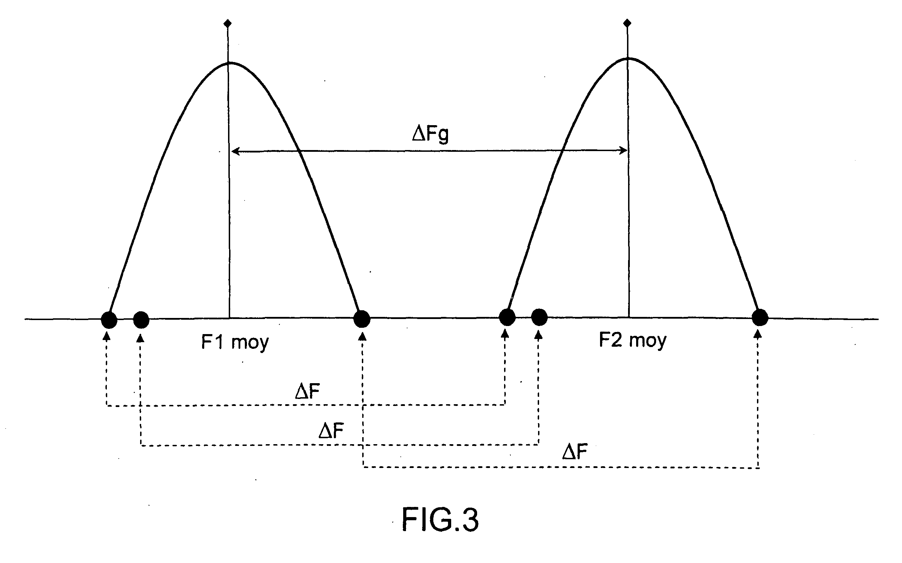

La figure 3 schématise des exemples de dispersion obtenus avec deux substrats intermédiaires sur lesquels ont été réalisés un ensemble de résonateurs.

Plus précisément, $F_1$ et $F_2$ étant les fréquences de résonance des deux résonateurs, il existe deux distributions de fréquence associées à une certaine quantité de pièces fabriquées ($N_1$ pièces de premiers résonateurs $RT_{1i}$ et $N_2$ pièces de seconds résonateurs $RT_{2j}$). Chaque distribution est caractérisée par une valeur moyenne $F_{1moy}$ et $F_{2moy}$ qui correspond au maximum de la distribution si on considère pour plus de simplicité une distribution normale.

Si les résonateurs $RT_{1i}$ et $RT_{2j}$ sont fabriqués avec les mêmes caractéristiques technologiques respectivement sur des substrats intermédiaires $RT_1$ et $RT_2$, l'équation suivante est vérifiée :

$$F_{2moy} - F_{1moy} = \Delta Fg \qquad (10)$$

Dans ce cas l'écart de fréquence moyen entre les deux distributions dépend uniquement de la différence entre les périodes de métallisation des deux résonateurs qui sont fixées par le dessin du masque. Cet écart est égal à l'écart de fréquence objectif $\Delta Fg$.

L'étendue des distributions de fréquence $F_1$ et $F_2$ étant sensiblement la même, il est alors possible d'apparier la quasi totalité des premiers résonateurs de fréquence $F_1$ avec les seconds résonateurs de fréquence $F_2$ de sorte que toute paire ainsi formée vérifie la relation suivante :

$$(F_{2j} - F_{1i}) \in [\Delta Fg - \delta , \Delta Fg + \delta ] \qquad (11)$$

et $\delta$ représente la tolérance allouée sur l'écart de fréquence et est limité par la précision de la mesure électrique utilisée pour l'appariement. Une tolérance typique de $\delta=5$kHz est atteignable.

Selon une première variante de l'invention, il est proposé d'apparier les deux types de résonateurs avant de procéder à l'assemblage dans un boîtier unique.

Pour cela, des séries de deux résonateurs différents sont réalisées sur des substrats intermédiaires piézoélectriques Avantageusement, les puces de la première série et celles de la seconde série présentent la même taille.

Typiquement, les résonateurs peuvent être conçus avec un taux de métallisation, c'est à dire un rapport de la largeur d'électrode à la période de métallisation, optimisé de façon à ce que la fréquence de résonance ne dépende que de l'épaisseur de métal déposée et d'une façon non significative des variations de la largeur d'électrode. Avantageusement on cherche à minimiser la sensibilité de la fréquence aux paramètres technologiques, soit le rapport de métallisation par période et le cas échéant l'épaisseur de métallisation. Pour le quartz coupe (YX/)/36° et une épaisseur de métallisation relative (définie comme le rapport de l'épaisseur de l'électrode sur deux fois la période du réseau qui correspond ainsi à la longueur d'onde acoustique) comprise entre 1 et 5%, un rapport de métallisation compris entre 0,55 et 0,75 s'avère le plus avantageux en ce sens.

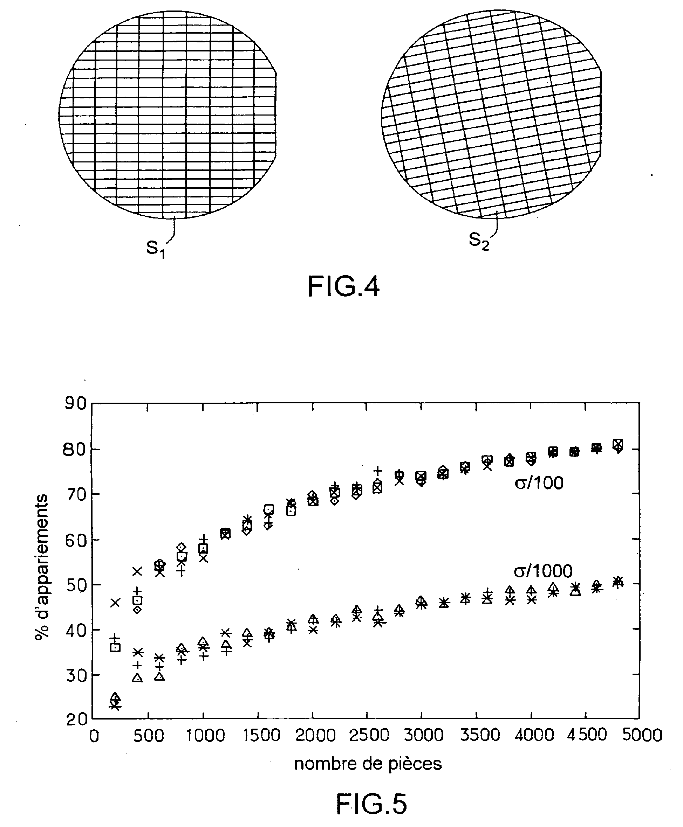

Selon cette première variante, on fabrique un lot typique de fabrication (par exemple 25 tranches) en utilisant les procédés standard de dépôt de couches métalliques et de photolithographie utilisés pour les résonateurs SAW. Les tranches de type $S_1$ et $S_2$ sont fabriquées autant que faire se peut dans les mêmes conditions, et sont illustrées en figure 4, qui met en évidence, la réalisation des deux types résonateurs. Chaque résonateur présente une direction de propagation différente par rapport à l'axe X (axe horizontal sur la figure 4 perpendiculaire au méplat). Les traits correspondent aux frontières de chaque puce.

Les tranches utilisées pour les deux types de résonateurs proviennent en particulier du même bloc de quartz d'où sont extraits les tranches suite à une opération de découpe afin de minimiser les variations de fréquence liées aux tolérances sur les angles de coupe et de propagation.

Le dépôt métallique pour réaliser les peignes d'électrodes pour les deux types de résonateurs est effectué dans le cadre du même lot de fabrication (alternance de premiers substrats intermédiaires $S_1$ et de seconds $S_2$).

L'ensemble de ces conditions conduit à minimiser l'écart :

$$F_{2moy} - F_{1moy} - \Delta Fg$$

Si l'on évalue le rendement d'appariement en fonction du nombre de pièces fabriquées tel qu'illustré en figure 5, on constate que la courbe est asymptotique et que plus les nombres de pièces à apparier $N_1$, $N_2$ sont importants, plus le rendement attendu est élevé.

On constate par ailleurs que plus la tolérance allouée sur l'écart de fréquence δ est faible plus le rendement d'appariement est faible. Les 2 courbes de la figure 2 montrent un exemple d'appariement pour δ = σ/100 et δ = σ /1000 où σ est l'écart type des distributions de fréquence $F_1$ et $F_2$ supposées gaussiennes.

Cette constatation suggère d'augmenter le nombre de pièces à apparier au-delà de la taille d'un lot unique de fabrication et par conséquent d'apparier des résonateurs de lots de fabrication différents.

Dans le cadre des applications capteur sans calibrage, la tolérance allouée sur l'écart de fréquence δ est très faible (de l'ordre de quelques kHz).

Une différence de variation de quelques parties par million (ppm) entre les deux fréquences de résonance après appariement (vieillissement naturel de la puce, variations engendrées par l'assemblage,..) peut par conséquent compromettre le résultat de cet appariement.

Il est donc judicieux d'effectuer l'appariement le plus tard possible dans la fabrication du composant et d'essayer de stabiliser autant que faire se peut le composant avant appariement.

Dans le cadre de cette première variante de l'invention, les étapes de fabrication sont avantageusement effectuées dans l'ordre suivant :

- la fabrication des tranches $S_1$ et $S_2$
- la découpe unitaire des puces correspondant à des résonateurs unitaires à partir desdites tranches
- la stabilisation des puces découpées par voie thermique majoritairement basée sur un étuvage à température constante
- l'appariement sur la base d'une mesure électrique sous pointes
- l'assemblage des paires dans un boîtier unique avec un procédé de collage normalisé et reproductible de façon à minimiser la dispersion de sensibilité (kHz/°C)
- la fermeture du boîtier renfermant les paires de résonateurs
- la stabilisation du composant final par voie thermique basée sur des phases de cyclage en température et d'étuvage à température constante.

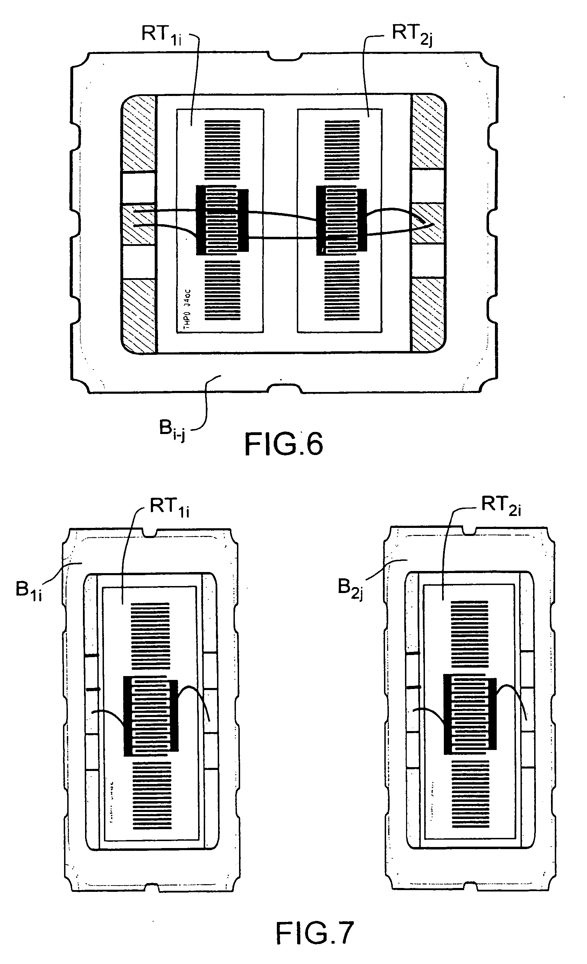

La figure 6 illustre cette première variante de l'invention, dans laquelle le procédé conduit à assembler des paires de résonateurs $RT_{i1}$ et $RT_{j2}$ dans un même boîtier Bi-j.

Selon une seconde variante de l'invention, il est également proposé de procéder dans un premier temps à la réalisation de l'ensemble des puces unitaires, d'assembler chacune des puces dans un boîtier unitaire, puis de réaliser l'opération d'appariement. On obtient ainsi une série de couples de premier et second résonateurs.

La figure 7 illustre cette seconde variante de l'invention dans laquelle les résonateurs $RT_{i1}$ et $RT_{j2}$ sont appariés dans deux boîtiers différents $B_{1i}$ et $B_{2j}$.

**Revendications**

1.  Procédé de fabrication collective de capteurs de température interrogeables à distance, chaque capteur comportant au moins un premier résonateur et un second résonateur, chaque résonateur comportant des transducteurs à ondes acoustiques et de conception telle qu'ils présentent respectivement une première et une seconde fréquences de fonctionnement, **caractérisé en ce qu'**il comporte les étapes suivantes :

    - la fabrication d'une première série de premiers résonateurs ($RT_{1i}$), lesdits premiers résonateurs comportant chacun une première fréquence de fonctionnement appartenant à un premier ensemble de fréquences centré sur une première fréquence centrale;
    - la fabrication d'une seconde série de seconds résonateurs ($RT_{2j}$), lesdits seconds résonateurs comportant chacun une seconde fréquence de fonctionnement appartenant à un second ensemble de fréquences centré sur une seconde fréquence centrale;
    - la mesure des fréquences de résonance des premiers résonateurs et des seconds résonateurs,
    - une série d'appariements d'un premier résonateur ($RT_{1i}$) et d'un second résonateur ($RT_{2j}$) de manière à former des couples de résonateurs présentant une différence de fréquences de fonctionnement égale à la différence des première et seconde fréquences centrales.

2.  Procédé de fabrication selon la revendication 1, **caractérisé en ce qu'**il comprend les étapes suivantes :

    - la fabrication de premiers résonateurs ($RT_{1i}$) sur un premier substrat intermédiaire ($S_1$) et la fabrication de seconds résonateurs ($RT_{i2}$) sur un second substrat intermédiaire ($S_2$);
    - des découpes unitaires de premières et de secondes puces comportant respectivement les premiers et seconds résonateurs à partir desdits substrats intermédiaires ;
    - l'appariement d'une première et d'une seconde puces ;
    - l'assemblage des paires de puces dans un boîtier.

3.  Procédé de fabrication selon la revendication 1, **caractérisé en ce qu'**il comprend :

    - la fabrication de premiers résonateurs ($RT_{1i}$) sur un premier substrat intermédiaire et la fabrication de seconds résonateurs ($RT_{i2}$) sur un second substrat intermédiaire ;
    - des découpes unitaires de premières et de secondes puces comportant respectivement les premiers et seconds résonateurs à partir desdits substrats intermédiaires
    - l'assemblage en boîtier individuel des premières puces et des secondes puces dans des boîtiers individuels
    - l'appariement d'une première et d'une seconde puces mises au préalable en boîtier.

4.  Procédé de fabrication selon la revendication 1, **caractérisé en ce qu'**il comprend en outre une étape de stabilisation en température des premiers et seconds résonateurs.

5.  Procédé de fabrication selon l'une des revendications 1 ou 2, **caractérisé en ce que** les résonateurs sont réalisés sur un substrat intermédiaire en quartz.

6.  Procédé de fabrication selon l'une des revendications précédentes, **caractérisé en ce que** les premiers résonateurs sont orientés sur le premier substrat intermédiaire selon une première direction, les seconds résonateurs sont orientés sur le second substrat intermédiaire selon une seconde direction, lesdites directions correspondant aux directions de propagation des ondes de surface, et ce de manière à ce que la première direction fasse un angle non nul avec la seconde direction.

7.  Procédé de fabrication selon l'une des revendications 1 à 6, **caractérisé en ce que** les premiers résonateurs et seconds résonateurs sont réalisés à la surface d'un premier et d'un second substrats intermédiaires de coupe cristalline différente, les directions de propagation des ondes de surface étant identiques sur les deux substrats intermédiaires.

8.  Procédé de fabrication selon l'une des revendications 1 à 7, **caractérisé en ce que** les résonateurs sont de type résonateurs à ondes de surface

9.  Procédé de fabrication selon l'une des revendications 1 à 7, **caractérisé en ce que** les résonateurs sont de type résonateurs à ondes de volume

**Claims**

1.  A process for the collective manufacture of remote temperature sensors to be interrogated, each sensor including at least a first resonator and a second resonator, each resonator including acoustic wave transducers and being designed so as to respectively have a first and a second operating frequency, **characterised in that** it includes the following steps:

    - manufacturing a first series of first resonators ($RT_{1i}$), each of said first resonators having a first operating frequency belonging to a first set of frequencies centred on a first central frequency;
    - manufacturing a second series of second resonators ($RT_{2i}$), said second resonators each including a second operating frequency belonging to a second set of frequencies centred on a second central frequency;
    - measuring the resonance frequencies of the first resonators and the second resonators;
    - pairing a series of first resonators ($RT_{1i}$) and second resonators ($RT_{2i}$) so as to form pairs of resonators having a difference in operating frequencies which is equal to the difference between the first and second central frequencies.

2.  The manufacturing process according to claim 1, **characterised in that** it includes the following steps:

    - manufacturing first resonators ($RT_{1i}$) on a first intermediate substrate ($S_1$) and manufacturing second resonators ($RT_{2i}$) on a second intermediate substrate ($S_2$);
    - unitarily cutting out first and second chips respectively comprising the first and second resonators from said intermediate substrates;
    - pairing a first and a second chip;
    - assembling pairs of chips into a unit.

3.  The manufacturing process according to claim 1, **characterised in that** it includes:

    - manufacturing first resonators ($RT_{1i}$) on a first intermediate substrate ($S_1$) and manufacturing second resonators ($RT_{i2}$) on a second intermediate substrate;
    - unitarily cutting out first and second chips respectively comprising the first and second resonators from said intermediate substrates;
    - assembling the first and the second chips present in an individual unit to form a single unit;
    - pairing a first and a second chip previously placed in a unit.

4.  The manufacturing process according to claim 1, **characterised in that** it further includes a step of temperature stabilising the first and second resonators.

5.  The manufacturing process according to any one of claims 1 to 2, **characterised in that** the resonators are realised on a quartz intermediate substrate.

6.  The manufacturing process according to any one of the previous claims, **characterised in that** the first resonators are oriented on the first intermediate substrate in a first direction, the second resonators are oriented on the second intermediate substrate in a second direction, said directions corresponding to the propagation directions of the surface waves, and in such a way that the first direction creates a non-zero angle with the second direction.

7.  The manufacturing process according to any one of claims 1 to 6, **characterised in that** the first resonators and the second resonators are realised on the surface of a first and a second intermediate substrate having a different crystalline cut, the propagation directions of the surface waves on the two intermediate substrates being identical.

8.  The manufacturing process according to any one of claims 1 to 7, **characterised in that** the resonators are of surface wave resonator type.

9.  The manufacturing process according to any one of claims 1 to 7, **characterised in that** the resonators are of volume wave resonator type.

**Patentansprüche**

1. Verfahren zur kollektiven Herstellung von fernabfragbaren Temperatursensoren, wobei jeder Sensor wenigstens einen ersten Resonator und einen zweiten Resonator umfasst, wobei jeder Resonator Schallwellenwandler aufweist und so ausgelegt ist, dass er jeweils eine erste und eine zweite Betriebsfrequenz hat, **dadurch gekennzeichnet, dass** es die folgenden Schritte beinhaltet:

   - Herstellen einer ersten Reihe von ersten Resonatoren ($RT_{1i}$), wobei die ersten Resonatoren jeweils eine erste Betriebsfrequenz haben, die zu einem ersten Satz von auf einer ersten Mittenfrequenz zentrierten Frequenzen gehört;
   - Herstellen einer zweiten Reihe von zweiten Resonatoren ($RT_{2i}$), wobei die zweiten Resonatoren jeweils eine zweite Betriebsfrequenz haben, die zu einem zweiten Satz von auf einer zweiten Mittenfrequenz zentrierten Frequenzen gehört;
   - Messen der Resonanzfrequenzen der ersten Resonatoren und der zweiten Resonatoren;
   - Paaren einer Serie aus einem ersten Resonator ($RT_{1i}$) und einem zweiten Resonator ($RT_{2i}$), um Paare von Resonatoren mit einer Differenz von Betriebsfrequenzen zu bilden, die gleich der Differenz zwischen der ersten und der zweiten Mittenfrequenz ist.

2. Herstellungsverfahren nach Anspruch 1, **dadurch gekennzeichnet, dass** es die folgenden Schritte beinhaltet:

   - Herstellen von ersten Resonatoren ($RT_{1i}$) auf einem ersten Zwischensubstrat ($S_1$) und Herstellen von zweiten Resonatoren ($RT_{2i}$) auf einem zweiten Zwischensubstrat ($S_2$);
   - einheitliches Abschneiden von ersten und zweiten Chips, die jeweils den ersten und zweiten Resonator umfassen, von den Zwischensubstraten;
   - Paaren eines ersten und eines zweiten Chips;
   - Zusammenfügen von Chippaaren zu einer Einheit.

3. Herstellungsverfahren nach Anspruch 1, **dadurch gekennzeichnet, dass** es Folgendes beinhaltet:

   - Herstellen von ersten Resonatoren ($RT_{1i}$) auf einem ersten Zwischensubstrat ($S_1$) und Herstellen von zweiten Resonatoren ($RT_{i2}$) auf einem zweiten Zwischensubstrat;
   - einheitliches Abschneiden von ersten und zweiten Chips, die jeweils den ersten und zweiten Resonator umfassen, von den Zwischensubstraten;
   - Zusammenfügen der ersten und zweiten Chips in den individuellen Einheiten zu einer einzigen Einheit;
   - Paaren eines ersten und eines zweiten Chips, die zuvor in einer Einheit platziert wurden.

4. Herstellungsverfahren nach Anspruch 1, **dadurch gekennzeichnet, dass** es einen Schritt des Temperaturstabilisierens des ersten und zweiten Resonators beinhaltet.

5. Herstellungsverfahren nach Anspruch 1 oder 2, **dadurch gekennzeichnet, dass** die Resonatoren auf einem Zwischensubstrat aus Quarz realisiert werden.

6. Herstellungsverfahren nach einem der vorherigen Ansprüche, **dadurch gekennzeichnet, dass** die ersten Resonatoren auf dem ersten Zwischensubstrat in einer ersten Richtung ausgerichtet sind, die zweiten Resonatoren auf dem zweiten Zwischensubstrat in einer zweiten Richtung ausgerichtet sind, wobei die Richtungen den Ausbreitungsrichtungen der Oberflächenwellen entsprechen, auf eine solche Weise, dass die erste Richtung einen Winkel von ungleich null zur zweiten Richtung bildet.

7. Herstellungsverfahren nach einem der Ansprüche 1 bis 6, **dadurch gekennzeichnet, dass** die ersten Resonatoren und die zweiten Resonatoren auf der Oberfläche eines ersten und eines zweiten Zwischensubstrats mit einem anderen kristallinen Schnitt realisiert werden, wobei die Ausbreitungsrichtungen der Oberflächenwellen auf den beiden Zwischensubstraten identisch sind.

8. Herstellungsverfahren nach einem der Ansprüche 1 bis 7, **dadurch gekennzeichnet, dass** die Resonatoren vom Oberflächenwellenresonatortyp sind.

9. Herstellungsverfahren nach einem der Ansprüche 1 bis 7, **dadurch gekennzeichnet, dass** die Resonatoren vom Volumenwellenresonatortyp sind.

FIG.1

FIG.2

FIG.3

FIG.4

FIG.5

RT$_{1i}$          RT$_{2j}$

B$_{i-j}$

## FIG.6

RT$_{1i}$          RT$_{2i}$

B$_{1i}$          B$_{2j}$

## FIG.7

## RÉFÉRENCES CITÉES DANS LA DESCRIPTION

**Documents brevets cités dans la description**

- WO 2005103639 A

**Littérature non-brevet citée dans la description**

- **W. Buff et al.** Universal pressure and temperature SAW sensor for wireless applications. *IEEE Ultra. Symp. Proc.,* 1997

- **BUFF W. et al.** Universal pressure and temperature SAW sensor for wireless applications. *ULTRASON-ICS SYMPOSIUM PROCEEDINGS,* 1997, vol. 1, 359-362